# FASCICULE DE BREVET EUROPEEN

(11) **EP 1 004 173 B1**
(45) Date de publication et mention de la délivrance du brevet: **15.02.2006**
(21) Numéro de dépôt: 99925086.3
(22) Date de dépôt: 15.06.1999
(51) Int. Cl.: H04B 7/185, H04Q 7/32

(54) **PROCEDE DE COMMUNICATION D'UN TERMINAL DE COMMUNICATION RADIO CELLULAIRE ET SATELLITAIRE, ET TERMINAL POUR LA MISE EN OEUVRE DU PROCEDE**
KOMMUNIKATIONSVERFAHREN EINES ZELLULÄREN UND SATELLITEN-KOMMUNIKATIONSFUNKGERÄT UND ENDGERÄT DAFÜR
METHOD FOR COMMUNICATING A CELLULAR RADIO AND SATELLITE COMMUNICATION TERMINAL, AND TERMINAL FOR IMPLEMENTING SAID METHOD

(30) Priorité: 16.06.1998 FR 9807566
(43) Date de publication de la demande: 31.05.2000
(73) Titulaire: SAGEM S.A., 75116 Paris (FR)
(72) Inventeur: CHARBONNIER, Philippe, F-78600 Le Mesnil Le Roi (FR)
(74) Mandataire: Bloch, Gérard
(86) Numéro de dépôt international: PCT/FR1999/001415
(87) Numéro de publication internationale: WO 1999/066659

(56) Documents cités:
- EP-A- 0 831 599
- WO-A-96/34503
- WO-A-98/20629
- PRISCOLI DELLI F: "ARCHITECTURE OF ON INTEGRATED GSM-SATELLITE SYSTEM" EUROPEAN TRANSACTIONS ON TELECOMMUNICATIONS AND RELATED TECHNOLOGIES, vol. 5, no. 5, 1 septembre 1994 (1994-09-01), pages 91-99, XP000470682

## Description

En téléphonie mobile, une nouvelle génération de téléphones mobiles, la "troisième génération" utilisant de nouvelles technologies (relatives à des normes telles que par exemple la norme UMTS - Universal Mobile Telephone System- système de téléphone mobile universel), se développe actuellement. Il s'agit de téléphones disposant d'un accès à un réseau cellulaire terrestre et d'un accès à un réseau téléphonique satellitaire comprenant une pluralité de satellites terrestres. On notera d'emblée qu'on utilisera le terme "satellitaire" pour qualifier ce qui est relatif au satellite, par analogie avec le terme "cellulaire" qui qualifie, en téléphonie mobile, la cellule topographique centrée sur une station de base terrestre.

Un tel système est décrit dans WO 96/34503( Aethos).

Grâce à des interconnexions entre réseaux, un téléphone mobile d'un réseau satellitaire peut communiquer avec un téléphone mobile d'un réseau cellulaire. Lors de la communication, le téléphone satellitaire émet un flux d'informations, vers un satellite accessible de son réseau satellitaire, par une voie montante satellitaire, pour le téléphone satellitaire. Les informations sont ensuite acheminées par le réseau satellitaire puis par le réseau cellulaire jusqu'à une station de base du réseau cellulaire, couvrant la zone dans laquelle se trouve le téléphone cellulaire. La station de base retransmet les informations vers le téléphone cellulaire, par une voie descendante cellulaire, pour le téléphone cellulaire. De façon symétrique, le téléphone cellulaire émet un flux d'informations vers la station de base, par une voie montante cellulaire. Ce flux de informations est acheminé par le réseau cellulaire puis par le réseau satellitaire jusqu'au satellite qui retransmet les informations vers le téléphone satellitaire, par une voie descendante satellitaire.

Selon le vocabulaire utilisé par l'homme du métier, une voie désigne le canal de transport des informations transmises, le chemin emprunté par ces informations. Cette voie peut être satellitaire, dans le cas où les informations transitent par un réseau satellitaire, ou cellulaire, dans le cas où les informations transitent par un réseau cellulaire. La voie est montante lorsqu'elle transporte un flux d'informations montant, partant du téléphone, et descendante lorsqu'elle transporte un flux d'informations descendant, arrivant au téléphone.

Un réseau satellitaire présente l'avantage de couvrir, avec un nombre réduit de satellites, des zones géographiques très étendues et/ou difficilement couvertes par un réseau cellulaire, comme par exemple les océans, les déserts ou les régions montagneuses. En outre, un réseau satellitaire peut supporter des débits de données beaucoup plus importants qu'un réseau cellulaire. En revanche, le coût des communications à travers un réseau cellulaire est généralement plus avantageux que celui des communications à travers un réseau satellitaire.

L'invention propose de tirer encore davantage profit d'une exploitation combinée des réseaux de communication cellulaires terrestres et des réseaux de communication satellitaires de téléphones mobiles, voire, plus généralement, de tous terminaux de communication radio.

A cet effet, l'invention concerne un procédé de communication d'un terminal de communication radio disposant d'un accès à un réseau cellulaire de communication et d'un accès à un réseau satellitaire de communication, dans lequel, au cours d'une même communication, le terminal émet des informations par voie montante et reçoit des informations par voie descendante, l'une des deux voies, montante et descendante, étant cellulaire et l'autre voie étant satellitaire.

Dans l'invention, il est remarquable que les deux voies, montante et descendante, soient dissymétriques. L'une est satellitaire et l'autre cellulaire.

Un telle dissymétrie présente un grand intérêt, notamment lorsque les flux montant et descendant d'informations sont eux-mêmes dissymétriques. C'est le cas par exemple lorsqu'un téléphone mobile communique avec un serveur d'informations, auquel il n'envoie que des requêtes, mais reçoit en réponse un flux d'informations très important.

On peut également tirer profit de la dissymétrie des voies montante et descendante lors d'une communication d'un point à de multiples points, par exemple lors d'une réunion téléphonique. Il est alors préférable, pour des raisons de rapidité, que les multiples points reçoivent les informations par voie satellitaire, un même satellite pouvant couvrir une très large étendue.

Il peut également, simplement pour des raisons de coût ou pour optimiser le rapport coût/qualité de la communication, choisir d'aiguiller la voie montante sur l'un des réseaux et l'autre voie sur l'autre réseau, selon les circonstances.

Avantageusement, un système de gestion du trafic étant prévu pour gérer le trafic des informations à travers les réseaux satellitaire et cellulaire, le système de gestion du trafic recherche les réseaux les mieux adaptés pour la voie montante et pour la voie descendante, respectivement.

Avantageusement encore, la recherche de réseaux tient compte des positions respectives du terminal et de son correspondant et de la charge des réseaux.

De préférence, le terminal recherche les réseaux les mieux adaptés pour la voie montante et pour la voie descendante.

Dans ce cas, et avantageusement encore, la recherche du terminal tient compte des besoins du terminal.

Enfin, le système de gestion du trafic et le terminal peuvent négocier le choix des réseaux pour la voie montante et pour la voie descendante.

L'invention concerne également un terminal de communication radio pour la mise en oeuvre du procédé ci-dessus, agencé pour communiquer à travers un réseau cellulaire et à travers un réseau satellitaire, comprenant des moyens d'émission destinés à émettre un flux d'informations par une voie montante et des moyens de réception destinés à recevoir un flux d'informations par une voie descendante, caractérisé par le fait que la voie montante peut être aiguillée sur l'un des deux réseaux satellitaire et cellulaire et la voie descendante peut être aiguillée sur l'autre réseau, au cours d'une même communication.

L'invention sera mieux comprise à l'aide de la description suivante d'un mode de réalisation particulier du procédé de communication de l'invention et d'une forme de réalisation particulière du terminal de communication radio de l'invention en référence au dessin annexé sur lequel:

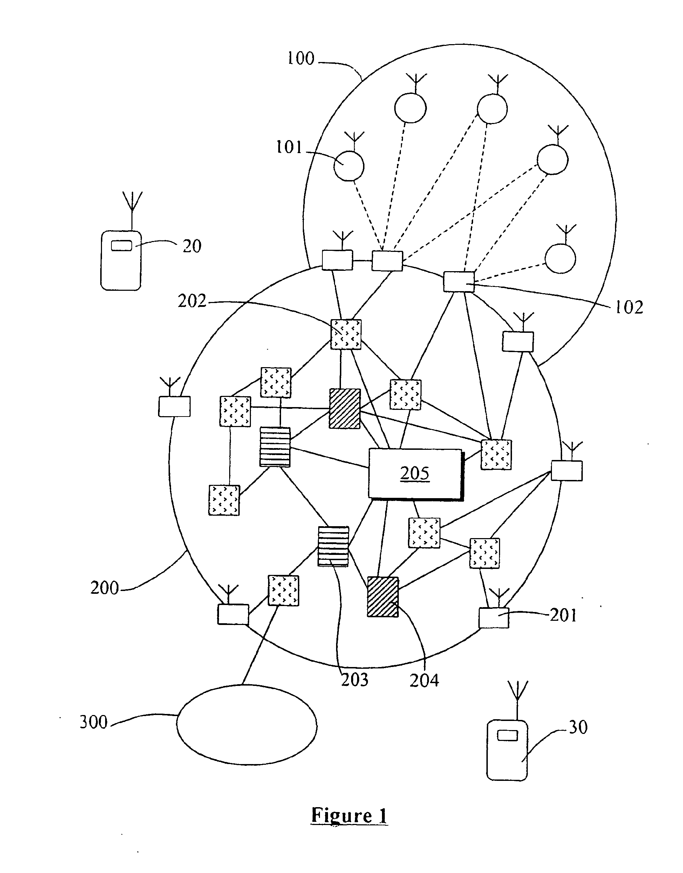

- la figure 1 représente un schéma synoptique d'un réseau cellulaire et d'un réseau satellitaire,
- la figure 2 représente un schéma simplifié du schéma de la figure 1 et
- la figure 3 représente un schéma bloc fonctionnel du terminal de communication radio, selon la forme de réalisation particulière.

Dans l'exemple particulier de la description, le terminal de communication radio est un téléphone mobile 20 disposant d'un accès à un réseau cellulaire de communication 200 et d'un accès à un réseau satellitaire de communication 100.

Le réseau cellulaire 200 comprend:
- des stations de base 201, auxquelles des téléphones mobiles "s'accrochent", se relient par liaison radio pour communiquer à travers le réseau cellulaire 200, couvrant chacune une cellule topographique, en d'autres termes une zone géographique terrestre déterminée autour de la station de base,
- des centres MSC 202 (Mobile Switching Center - centre de commutation de mobile), destinés à transmettre et à aiguiller les données d'une communication vers un autre centre MSC plus proche de la destination des données, ou vers la station de base de destination à laquelle le téléphone destinataire est relié,
- des registres VLR 203 (Visited Location Register - registre de position visité) et HLR 204 (Home Location Register - registre de position résident) contenant des paramètres d'abonnement et les positions des téléphones mobiles localisés par un centre MSC 202 et
- un centre 205 de gestion du trafic destiné à gérer le trafic de données à travers les réseaux cellulaire 200 et satellitaire 100.

Le centre, ou système, de gestion 205 est destiné à rechercher, en coopération avec les centres MSC 202 et avec les registres VLR 203 et HLR 204, le chemin, ou trajet, le plus efficace pour l'acheminement de données d'un point de provenance à au moins un point de destination, compte tenu notamment de la charge des réseaux 200 et 100, et les réseaux les mieux adaptés respectivement pour la voie montante et la voie descendante d'un téléphone mobile, lors d'une même communication de celui-ci, comme cela sera explicité dans la description du procédé de communication.

Le réseau satellitaire 100 comporte une pluralité de satellites terrestres 101 de communication radio, en orbite autour de la Terre, couvrant chacun une zone géographique terrestre déterminée, ici fixe.

Le réseau cellulaire 200 et le réseau satellitaire 100 sont interconnectés, par l'intermédiaire d'une pluralité de stations de satellite 102 basées sur la Terre, chacune en liaison avec au moins un satellite 101 et avec au moins un centre MSC 202.

Chaque centre MSC 202 est relié à au moins un autre centre MSC 202. Les stations de base 201 et les stations de satellite 102 sont chacune reliées à au moins un centre MSC-202. De même, chaque centre MSC 202 est relié à un registre de position (VLR 203 ou HLR 204). Enfin, le centre 205 de gestion du trafic est relié à une pluralité de centres MSC 202 ainsi qu'aux registres HLR 204 et VLR 203. Bref, les éléments (centres MSC 202, registres HLR 204 et VLR 203, centre de gestion 205) des réseaux cellulaire 100 et satellitaire 200 sont tous reliés entre eux, directement ou avec interposition d'autres éléments.

En outre, les réseaux cellulaire 200 et satellitaire 100 sont interconnectés avec d'autres réseaux téléphoniques 300 (réseau téléphonique commuté RTC et réseau numérique à intégration de service RNIS) par l'intermédiaire de centres MSC 202.

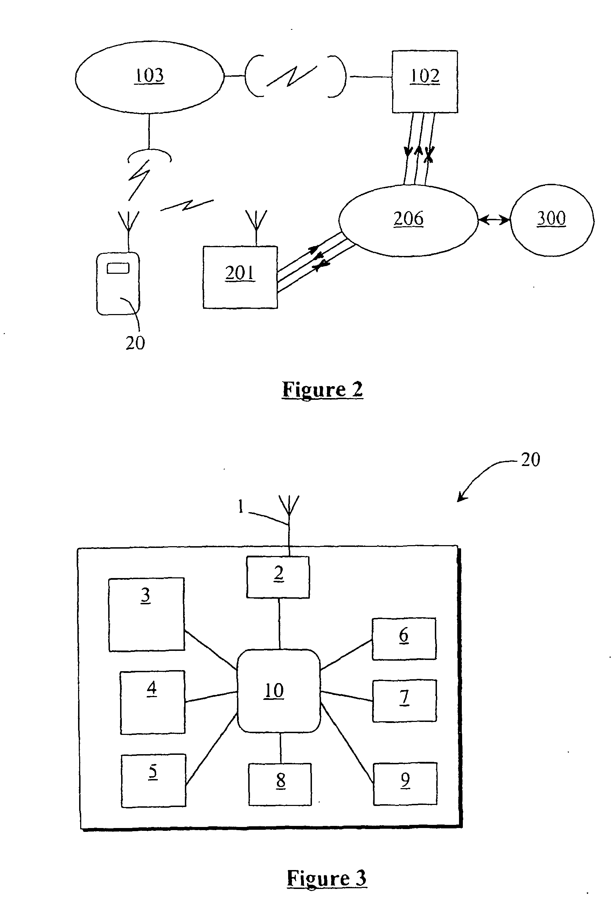

On notera que, sur la figure 2, le bloc 103 représente la constellation de satellites 101 du réseau satellitaire 100 et le bloc 206 représente un sous-système des réseaux comprenant le centre de gestion 205, les centres MSC 202, et les registres VLR 203 et HLR 204.

L'infrastructure des réseaux cellulaire 200 et satellitaire 100 est agencée pour gérer, séparément, indépendamment l'une de l'autre, la voie montante et la voie descendante d'un téléphone mobile, lors d'une même communication. Elle est en outre agencée pour pouvoir commuter d'un réseau à un autre réseau non seulement des liens bidirectionnels, mais également des liens unidirectionnels.

On rappelle ici que par le terme "voie", on entend désigner le canal de transport des informations, des données, d'un téléphone mobile. Une voie est dite "satellitaire" lorsque les données empruntant cette voie partent du téléphone mobile en se dirigeant vers le réseau satellitaire 100, dans le cas d'une voie montante, ou arrivent au téléphone mobile en provenant du réseau satellitaire 100, dans le cas d'une voie descendante. De même, une voie est dite "cellulaire" lorsque les données empruntant cette voie partent du téléphone mobile en se dirigeant vers le réseau cellulaire 200, dans le cas d'une voie montante, ou arrivent au téléphone mobile en provenant du réseau cellulaire 200, dans le cas d'une voie descendante.

Le téléphone mobile 20, représenté sur la figure 3, est agencé pour communiquer à travers le réseau cellulaire 200, en mode cellulaire, et à travers le réseau satellitaire 100, en mode satellitaire, et comprend une antenne radio 1, un bloc d'émission et de réception radio 2, relié à l'antenne 1, une interface homme/machine 3, une batterie d'alimentation 4 et, en mémoire 5, diverses applications de communication vocale (communication vocale bidirectionnelle avec un correspondant, envoi d'un message vocal à un correspondant) et de communication non vocale (envoi d'un message écrit à un correspondant, consultation d'informations auprès d'un serveur, etc.).

L'antenne radio 1 et le bloc d'émission et de réception 2 sont capables d'émettre et de recevoir des données via le réseau satellitaire 100 et via le réseau cellulaire 200. Le bloc 2 comprend une chaîne d'émission radio et une chaîne de réception radio agencées pour fonctionner simultanément, au cours d'une même communication, soit toutes les deux dans le même mode (cellulaire ou satellitaire), soit l'une dans l'un des modes (satellitaire et cellulaire) et l'autre dans l'autre mode. Lors d'une communication, un flux montant d'informations, de données, est émis par la chaîne d'émission radio, par une voie montante, satellitaire ou cellulaire, et un flux descendant de données est reçu par la chaîne de réception radio, par une voie descendante, satellitaire ou cellulaire.

Le téléphone 20 comprend en outre, en mémoire 6, un protocole de communication à travers le réseau cellulaire 200 et, en mémoire 7, un protocole de communication à travers le réseau satellitaire 100.

Enfin, le téléphone 20 comprend un module de coordination 8, un module 9 de recherche de réseaux et un bloc de contrôle 10, en l'espèce un microcontrôleur, auquel tous les éléments du téléphone 20 sont reliés et destine à contrôler le fonctionnement du téléphone 20.

Le module de coordination 8 est destiné à aiguiller chacune des voies montante et descendante du téléphone 20 sur l'un des réseaux satellitaire 100 et cellulaire 200, comme cela sera explicité dans la description du procédé de communication. Lors d'une même communication, la voie montante et la voie descendante peuvent être soit toutes deux satellitaires, ou cellulaires, soit l'une satellitaire et l'autre cellulaire.

Le module 9 de recherche de réseaux est destiné à rechercher les réseaux les mieux adaptés pour la voie montante et pour la voie descendante du téléphone mobile 20, comme on le verra plus loin.

Chaque communication du téléphone 20 présente des caractéristiques particulières, selon l'application utilisée. Il peut s'agir d'une communication vocale ou non vocale, d'une communication bidirectionnelle ou unidirectionnelle, d'une communication avec un ou plusieurs correspondants, d'une consultation d'un serveur d'informations, ou encore à titre d'exemple, de l'envoi d'un message, vocal ou écrit. En outre, suivant sa position, le téléphone mobile 20 peut être situé en dehors ou à la limite d'une zone de couverture du réseau cellulaire, et/ou du réseau satellitaire, ou à l'intérieur d'une cellule de station de base 201, et/ou d'une zone de couverture d'un satellite 101 du réseau satellitaire 100. En fonction de toutes ces caractéristiques relatives à la communication du téléphone 20 et à sa position, la consommation en énergie de la batterie 4 du téléphone 20, la qualité de la communication, le débit des données dans chacune des voies montante et descendante du téléphone 20 et le coût de la communication peuvent varier.

En outre, le réseau satellitaire 100 et le réseau cellulaire 200 présentent chacun des caractéristiques spécifiques. Le réseau satellitaire offre une meilleure couverture géographique et supporte des débits de données beaucoup plus importants que le réseau cellulaire 200. En outre, dans le cas d'une communication d'un point à de multiples points, une réunion téléphonique par exemple, il est préférable, pour des raisons de rapidité, que les voies descendantes des multiples points soient satellitaires. En revanche, le coût des communications à travers le réseau cellulaire 200 est plus avantageux qu'à travers le réseau satellitaire 100 et une voie montante cellulaire use moins l'énergie de la batterie 4 du téléphone 20 qu'une voie montante cellulaire. Bref, chacun des réseaux, cellulaire 200 et satellitaire 100, présente des avantages et des inconvénients différents.

En fonction des besoins, ou contraintes, du téléphone 20 (en consommation d'énergie, en coût et en débit dans chacune des voies montante et descendante) et de sa position, le module de recherche 9 est destiné à rechercher les réseaux les mieux adaptés pour la voie montante et pour la voie descendante du téléphone 20.

Après la description structurelle du téléphone mobile 20, son fonctionnement, correspondant au procédé de communication de l'invention, va maintenant être décrit.

Le cas d'un appel entrant sur le téléphone 20 et d'un appel sortant du téléphone 20 vont être explicités.

### 1) Appel entrant

Dans l'exemple particulier de la description, un téléphone mobile 30, disposant d'un accès au réseau cellulaire 200 et d'un accès au réseau satellitaire 100, appelle le téléphone 20 afin d'établir avec lui une communication vocale bidirectionnelle, en duplex.

Les téléphones mobiles 20 et 30 ont respectivement une position P₁ et une position P₂ qui sont chacune répertoriées dans un registre de position (VLR 203 ou HL R 204).

Le téléphone 20 est située à l'intérieur de la cellule d'une station de base 201 mais en limite de zone de couverture du réseau cellulaire 200, et à l'intérieur de la zone de couverture d'un satellite 101 du réseau satellitaire 100. Au repos, le téléphone 20 est en liaison radio, ici par sondage périodique, avec le satellite 101 du réseau satellitaire 100 et la une station de base 201 du réseau cellulaire 200, à l'écoute d'éventuels appels entrants sur ces réseaux 100 et 200, et localisé par les deux réseaux cellulaire 200 et satellitaire 100.

Lors de l'établissement de la communication, le centre 205 de gestion du trafic est informé des caractéristiques de la communication demandée par le téléphone 30 et s'informe des positions respectives P₁ et P₂ du téléphone appelant 30 et du téléphone appelé 20, en consultant les registres de position VLR 203 et HLR 204. En fonction des positions P₁ et P₂, le centre de gestion 205 recherche les chemins possibles, dans les deux sens, à travers les réseaux cellulaire 200 et satellitaire 100, pour acheminer les données entre les deux téléphones 20 et 30. On soulignera ici que, pour une même communication, le trajet des données du téléphone 30 au téléphone 20 et le trajet des données du téléphone 20 au téléphone 30 peuvent être différents.

Par ailleurs, le centre 205 de gestion du trafic interroge régulièrement les centres MSC 202 afin de connaître la charge du réseau, autrement dit l'encombrement du trafic, à travers ces divers chemins.

Parmi les chemins possibles préalablement déterminés, le centre de gestion 205 sélectionne les chemins les plus efficaces, dans chacun des sens (du téléphone 20 au téléphone 30 et inversement), en fonction de la charge des réseaux sur ces chemins et des caractéristiques de la communication, et hiérarchise les chemins sélectionnés suivant leur efficacité. Le centre de gestion 205 recherche ainsi les réseaux les mieux adaptés, respectivement, pour la voie montante et pour la voie descendante du téléphone 20, compte tenu des positions respectives du téléphone mobile 20 et de son correspondant 30 et de la charge des réseaux. En fait, pour chacune des voies montante et descendante du téléphone 20, le centre de gestion 205 détermine quel est le réseau le mieux adapté, le plus efficace, et si l'autre réseau convient néanmoins, mais avec une efficacité moindre. Dans l'exemple particulier de la description, le centre de gestion 205 détermine que le réseau satellitaire 100 est le mieux adapté pour la voie montante, du fait de la position P₁ du téléphone mobile, mais que le réseau cellulaire 200 serait néanmoins acceptable, et que seul le réseau satellitaire 100 convient pour la voie descendante pour des raisons de charge du réseau cellulaire 200.

Puis le centre de gestion 205 présente l'appel entrant du téléphone 30 sur la voie descendante satellitaire, la plus efficace déterminée du téléphone 20.

A la réception de l'appel, le téléphone 20, à l'aide du bloc 9 de recherche de réseaux, recherche les réseaux les mieux adaptés respectivement pour la voie montante et pour la voie descendante, en tenant compte de ses besoins (en énergie de batterie 4, en coût, en application, etc.) et de sa position par rapport aux zones de couverture respectives du réseau cellulaire 200 et du réseau satellitaire 100. Le téléphone 20 détermine ainsi, pour chacune des voies montante et descendante, quel est le réseau qui convient le mieux et si l'autre réseau pourrait néanmoins convenir avec une efficacité moindre. Dans l'exemple particulier de la description, la batterie du téléphone 20 est en grande partie déchargée et le téléphone 20 est située en limite de la zone de couverture du réseau cellulaire 200. Le téléphone 20 détermine donc que, pour la voie descendante, le réseau satellitaire est le mieux adapté, pour une raison de qualité de la communication, mais que le réseau cellulaire peut néanmoins convenir, et que la voie montante doit impérativement être cellulaire, pour une raison d'économie de l'énergie de la batterie 4.

Puis le téléphone 20 et le centre 205 de gestion du trafic négocient l'un avec l'autre le choix du réseau pour la voie montante et du réseau pour la voie descendante.

Lors de la négociation, le centre 205 de gestion du trafic informe le téléphone 20 du réseau (satellitaire ou cellulaire) le mieux adapté, selon sa recherche, pour chacune des voies montante et descendante, et, le cas échéant, de la possibilité d'aiguiller l'une des voies, ou les deux, sur l'autre réseau.

En fonction de ces informations et du résultat de sa propre recherche de réseaux, le téléphone 20 choisit le réseau cellulaire 200 pour la voie montante et le réseau satellitaire 100 pour la voie descendante et entame la communication avec le téléphone 30.

Lors de la communication entre les deux téléphones 20 et 30, le téléphone 20 émet un flux de données par voie montante cellulaire et reçoit un flux de données par voie descendante satellitaire. Dans le téléphone 20, le module de coordination 8 se charge d'aiguiller la voie montante et la voie descendante sur le réseau cellulaire 200 et sur le réseau satellitaire 100, respectivement, ici en affectant des codes au flux montant de données, et aucun code au flux descendant. La chaîne d'émission radio et la chaîne de réception radio fonctionnent simultanément, en mode cellulaire et en mode satellitaire, respectivement.

Le réseau global libère donc la voie satellitaire montante et établit une voie cellulaire montante avec le téléphone 20.

En cours de communication, suivant les circonstances (évolution de la charge des réseaux, changement de position du téléphone 20, caractéristiques de la communication, etc.) le téléphone 20 et le centre de gestion 205 peuvent négocier à nouveau le choix des réseaux pour la voie montante et pour la voie descendante afin de modifier, le cas échéant, le réseau pour l'une des voies ou pour les deux.

### 2) Appel sortant

On va maintenant décrire, à titre d'exemple, le cas où le téléphone 20 appelle un serveur d'informations afin de consulter des informations auprès de celui-ci.

Le téléphone 20 recherche d'abord les réseaux les mieux adaptés pour la voie montante et pour la voie descendante respectivement, en fonction de sa position et de ses besoins pour la communication spécifique qu'il souhaite entamer (consultation d'un serveur informations), comme dans le cas de l'appel entrant. La consultation d'un serveur par un terminal consistant pour le terminal à envoyer au serveur de simples requêtes et à recevoir un flux important d'informations provenant du serveur, le téléphone 20 détermine que le réseau cellulaire 200 est le mieux adapté pour la voie montante, pour des raisons de coût et de débit (le réseau satellitaire étant toutefois envisageable) et que la voie descendante doit impérativement être satellitaire en raison du débit de données.

Puis le téléphone 20 lance l'appel pour établir la communication avec le serveur d'informations.

Au cours de l'établissement de cette communication, le centre de gestion 205 recherche les réseaux les mieux adaptés pour la voie montante et pour la voie descendante, comme dans le cas de l'appel entrant. Le centre de gestion 205 détermine ici que le réseau satellitaire 100 est le mieux adapté pour les deux voies descendante et montante, mais que le réseau cellulaire 200 convient néanmoins pour les deux voies, avec un débit de données inférieur.

Puis le téléphone 20 et le centre de gestion 205 négocient le choix des réseaux, comme dans le cas de l'appel entrant. Le téléphone 20 choisit finalement le réseau satellitaire 100 pour la voie descendante et le réseau cellulaire 200 pour la voie montante et entame la communication avec le serveur d'informations.

Lors de la communication entre le téléphone 20 et le serveur d'informations, la voie montante et lar voie descendante du tétephone 20 sont respectivement aiguillées sur le réseau cellulaire 200 et sur le réseau satellitaire 100 par le module de coordination 8. La chaîne d'émission radio et la chaîne de réception radio du bloc d'émission et de réception 2 fonctionnent simultanément, respectivement en mode cellulaire et en mode satellitaire.

Dans le cas où le téléphone 20 déterminerait que l'une des voies doit impérativement être aiguillée sur un réseau particulier et que la charge de ce réseau ne le permet pas, le téléphone 20 pourrait décider d'abandonner la communication.

Dans la description qui vient d'être faite, le téléphone mobile 20, au repos, est localisé par les deux réseaux satellitaire 100 et cellulaire 200. Dans une variante, le téléphone 20 n'est localisé que par l'un des réseaux cellulaire 200 et satellitaire 100. En d'autres termes et selon le vocabulaire utilisé l'homme du métier, le téléphone est "accroché" sur l'un seul des réseaux 200 et 100.

En cas d'appel entrant, celui-ci est d'office présenté au téléphone 20 par le réseau sur lequel il est accroché, puis, avant d'entamer la communication, le téléphone 20 et le centre de gestion 205 négocient le choix des réseaux respectivement pour la voie montante et pour la voie descendante, comme précédemment explicité. Le cas échéant, le téléphone 20 s'accroche sur l'autre réseau (sur lequel il n'est pas encore accroché) et bascule l'une des deux voies, montante et descendante, ou sur les deux voies, sur cet autre réseau.

On pourrait également envisager que le téléphone 20 et le centre de gestion 205 négocient le choix des réseaux au cours de la communication déjà entamée.

En cas d'appel sortant, le téléphone 20 lance l'appel par le réseau sur lequel il est accroché puis négocie avec le centre de gestion 205 le choix des réseaux, comme précédemment explicité. Le cas échéant, le téléphone 20 s'accroche sur l'autre réseau et bascule l'une de ses voies, montante et descendante, ou les deux voies, sur cet autre réseau.

Au lieu d'être fixe, la zone géographique terrestre couverte par le réseau satellitaire pourrait être défilante.

Dans la description qui vient d'être faite, les registres VLR, les centres MSC et le système de gestion du trafic sont des entités séparées, distinctes. En variante, on pourrait intégrer les registres VLR aux centres MSC ou encore héberger les fonctions du système de gestion dans des registres de position et/ou dans des centres MSC. Dans ce dernier cas, le système de gestion du trafic serait réparti entre ces différents éléments.

Bien entendu, l'invention s'applique à tout autre terminal de communication radio.

## Revendications

1. Procédé de communication d'un terminal de communication radio (20) disposant d'un accès à un réseau cellulaire de communication (200) et d'un accès à un réseau satellitaire de communication (100), dans lequel, au cours d'une même communication, le terminal (20) émet des informations par voie montante et reçoit des informations par voie descendante, l'une des deux voies, montante et descendante, étant cellulaire et l'autre voie étant satellitaire.

2. Procédé selon la revendication 1, dans lequel, un système (205) de gestion du trafic étant prévu pour gérer le trafic des informations à travers les réseaux satellitaire (100) et cellulaire (200), le système (205) de gestion du trafic recherche les réseaux les mieux adaptés pour la voie montante et pour la voie descendante, respectivement.

3. Procédé selon la revendication 2, dans lequel la recherche de réseaux tient compte des positions respectives du terminal (20) et de son correspondant (30) et de la charge des réseaux (200, 100).

4. Procédé selon l'une des revendications 1 à 3, dans lequel le terminal (20) recherche les réseaux les mieux adaptés pour la voie montante et pour la voie descendante.

5. Procédé selon la revendication 4, dans lequel la recherche du terminal (20) tient compte des besoins du terminal (20).

6. Procédé selon l'une des revendications 2 à 4, dans lequel le système (205) de gestion du trafic et le terminal (20) négocient le choix des réseaux pour la voie montante et pour la voie descendante.

7. Terminal de communication radio pour la mise en oeuvre du procédé selon la revendication 1, agencé pour communiquer à travers un réseau cellulaire (200) et à travers un réseau satellitaire (100), comprenant des moyens d'émission (1, 2) destinés à émettre un flux d'informations par une voie montante et des moyens de réception (1, 2) destinés à recevoir un flux d'informations par une voie descendante, **caractérisé par le fait que** la voie montante peut être aiguillée sur l'un des deux réseaux satellitaire (100) et cellulaire (200) et la voie descendante peut être aiguillée sur l'autre réseau, au cours d'une même communication.

8. Terminal selon la revendication 7, dans lequel sont prévus des moyens de coordination (8) agencés pour aiguiller la voie montante et la voie descendante sur l'un des réseaux et sur l'autre réseau, respectivement.

9. Terminal selon l'une des revendications 7 et 8, dans lequel les moyens d'émission (1, 2) et les moyens de réception (1, 2) sont agencés pour fonctionner simultanément.

10. Terminal selon l'une des revendications 7 à 9, comprenant des moyens (9) de recherche de réseaux agencé pour déterminer les réseaux les mieux adaptés pour la voie montante et pour la voie descendante, respectivement.

## Patentansprüche

1. Kommunikationsverfahren für ein Funkkommunikationsendgerät (20), das über einen Zugang zu einem Zellularverbindungsnetz (200) und einen Zugang zu einem Satellitenverbindungsnetz (100) verfügt, wobei im Verlauf ein und derselben Verbindung das Endgerät (20) Informationen über den aufsteigenden Pfad verschickt und Informationen über den absteigenden Pfad empfängt, wobei einer der beiden Pfade, wovon einer aufsteigend und der andere absteigend ist, zellulargestützt und der andere satellitengestützt ist.

2. Verfahren nach Anspruch 1, wobei ein Verkehrssteuerungssystem (205) vorgesehen ist, um den Datenverkehr über das Satellitennetz (100) und das Zellularnetz (200) zu steuern, wobei das Verkehrssteuerungssystem (205) nach den für den aufsteigenden Pfad bzw. den absteigenden Pfad am besten geeigneten Netzen sucht.

3. Verfahren nach Anspruch 2, wobei die Netzsuche die jeweiligen Positionen des Endgeräts (20) und seines Kommunikationspartners (30) und die Auslastung der Netze (200, 100) berücksichtigt.

4. Verfahren nach einem der Ansprüche 1 bis 3, wobei das Endgerät (20) nach den für den aufsteigenden Pfad bzw. den absteigenden Pfad am besten geeigneten Netzen sucht.

5. Verfahren nach Anspruch 4, wobei die Suche des Endgeräts (20) die Bedürfnisse des Endgeräts (20) berücksichtigt.

6. Verfahren nach einem der Ansprüche 2 bis 4, wobei das Verkehrssteuerungssystem (205) und das Endgerät (20) die Auswahl der Netze für den aufsteigenden Pfad und den absteigenden Pfad aushandeln.

7. Funkkommunikationsendgerät zur Durchführung des Verfahrens nach Anspruch 1, das dazu eingerichtet ist, über ein Zellularnetz (200) und über ein Satellitennetz (100) zu kommunizieren, und Sendeeinrichtungen (1, 2), die dazu bestimmt sind, einen Datenstrom über einen aufsteigenden Pfad zu versenden, und Empfangseinrichtungen (1, 2) umfasst, die dazu bestimmt sind, einen Datenstrom über einen absteigenden Ast zu empfangen, **dadurch gekennzeichnet, dass** im Laufe ein und derselben Verbindung der aufsteigende Pfad auf eines der beiden Netze, das Satellitennetz (100) oder das Zellularnetz (200), geleitet werden kann, und der absteigende Pfad auf das andere Netz geleitet werden kann.

8. Endgerät nach Anspruch 7, wobei Koordinierungseinrichtungen (8) vorgesehen sind, die dazu eingerichtet sind, den aufsteigenden Pfad und den absteigenden Pfad auf das eine der Netze bzw. das andere Netz zu leiten.

9. Endgerät nach einem der Ansprüche 7 und 8, wobei die Sendeeinrichtungen (1, 2) und die Empfangseinrichtungen (1, 2) dazu eingerichtet sind, gleichzeitig zu arbeiten.

10. Endgerät nach einem der Ansprüche 7 bis 9, Netzsucheinrichtungen (9) umfassend, die dazu eingerichtet sind, die für den aufsteigenden Pfad bzw. den absteigenden Pfad am besten geeigneten Netze zu bestimmen.

## Claims

1. Communication method for a radio communication terminal (20) having access to a cellular communication network (200) and access to a satellite-based communication network (100), wherein during a single communication, the terminal (20) transmits information via an upstream connection and receives information via a downstream connection, one of the two connections, upstream and downstream, being cellular and the other connection being satellite-based.

2. Method as claimed in Claim 1, wherein since a traffic management system (205) is provided to manage the information traffic through the satellite-based network (100) and the cellular network (200), the traffic management system (205) searches for the most suitable networks for the upstream connection and the downstream connection respectively.

3. Method as claimed in Claim 2, wherein the network search takes into account the respective positions of the terminal (20) and its opposite party (30) and of the load on the networks (200, 100).

4. Method as claimed in any one of Claims 1 to 3, wherein the terminal (20) searches for the most suitable networks for the upstream connection and for the downstream connection.

5. Method as claimed in Claim 4, wherein the search by the terminal (20) takes into account the requirements of the terminal (20).

6. Method as claimed in any one of Claims 2 to 4, wherein the traffic management system (205) and the terminal (20) negotiate the choice of networks for the upstream connection and the downstream connection.

7. Radio communication terminal for implementing the method as claimed in Claim 1, arranged so as to communicate through a cellular network (200) and through a satellite-based network (100), comprising transmitting means (1, 2) intended to transmit a flow of information via an upstream connection, and receiving means (1, 2) intended to receive a flow of information via a downstream connection, **characterised in that** the upstream connection can be directed onto one of the two networks, namely the satellite-based network (100) and the cellular network (200), and the downstream connection can be directed onto the other network during the same communication.

8. Terminal as claimed in Claim 7, wherein co-ordination means (8) are provided and are arranged to direct the upstream connection and the downstream connection onto one of the networks and onto the other network respectively.

9. Terminal as claimed in any one of Claims 7 and 8, wherein the transmitting means (1, 2) and the receiving means (1, 2) are arranged so as to operate simultaneously.

10. Terminal as claimed in any one of Claims 7 to 9, comprising network searching means (9) arranged so as to determine the most suitable networks for the upstream connection and the downstream connection respectively.
